# EUROPEAN PATENT APPLICATION

(11) **EP 4 361 951 A1**
(43) Date of publication of application: **01.05.2024**
(21) Application number: 22203174.2
(22) Date of filing: 24.10.2022
(51) Int. Cl.: G06T 7/10, A23L 5/10, G06T 7/33, G06T 7/62, G06T 7/70, G06V 10/82, G09B 19/00

(54) **AREA CALCULATION OF FOOD ITEMS USING IMAGE SEGMENTATION**

(71) Applicant: ELECTROLUX APPLIANCES AKTIEBOLAG, 105 45 Stockholm (SE)
(72) Inventor: TOPPANO, Michele, 33080 Porcia (IT); SCHIFFLER, Thorben, Charlotte, 28262-2373 (US); Shustrov, Dmitrii, 197342 Saint-Petersburg (RU); LUCKHARDT, Christoph, 91541 Rothenburg ob der Tauber (DE)
(74) Representative: Electrolux Group Patents

(57) **Abstract**

A method of determining foodstuff mass and/or amount as placed within or on an apparatus such as a kitchen appliance or oven, as well as the location of the foodstuff mass with respect to the apparatus, is presented. The method includes the steps of taking an image of the foodstuff, detecting a location of the foodstuff and/or the tray on which it lays, within a cavity of the appliance, segmenting the food portion of the image from the background of the image, determining global pixel values of the segmented food portion via a same perspective transformation as used to earlier take the image of the foodstuff, summing dimensions of 1 value pixels in the now transformed foodstuff image, and where the foodstuff image is coherent, adding up the 1 value pixels such that they represent the area covered by the food; and where the foodstuff image is incoherent, adding up the 1 value pixels of the individual coherent images making up the total incoherent image, so as to arrive at the number of individual foodstuffs depicted in the image. In addition, a determination may be made whether the location of the foodstuff is proper with messages to the user as well as control of the apparatus being based thereon. With this knowledge, recipes may be consulted and automatically or manually executed.

## Description

### Technical Field

The present invention relates to household appliances, including kitchen appliances or the like which may relate to the field of cooking food, the cooking for example taking place within although not limited to an oven and more particularly to a method for determining the mass and/or amount of food present in the oven for cooking. The present invention is further related to determining the location of the food with respect to the appliance and generating a message to the user and/or controlling the appliance based upon the appropriateness of the food location. Application of the present disclosure is not limited to ovens and may include any kitchen and/or food preparation related appliance wherein identification of the food presented for preparation, cooking and the like is advantageous. Examples of such application include steam oven or microwave or, for surface cooking, electric, induction or gas hob. While application of the present invention shall be focused on the oven per se, it shall be understood that the present invention may also be applied to the aforementioned examples.

With food preparation, there are a number of considerations to be kept in mind, including not only the type of food being prepared but also the amount of the food being prepared. Additionally, appropriateness of the location of the food, at least with respect to the appliance, plays a key role how the food is prepared by the appliance. By way of example, with respect to ovens and certain types of food, location may affect airflow route to the food, heat distribution onto the food and the available heating area of the food itself. The consequences of inappropriately placed food include not only ineffecetively prepared meals but also safety hazards. Specific knowledge of at least these considerations is required up front for a number of applications. For example, with respect to hobs, ovens and the like, such specific knowledge is particularly useful in order to be able to set the cooking temperature and related cooking parameters of the respective appliance in order to undertake and otherwise perform effective cooking. By way of example and with specific application to an oven, it would not be sufficient to know in advance that one wishes to simply cook some number of French fries on a tray arranged somewhere within an oven cavity but to actually know the number, actual amount and/or mass of the French fries in order to, and from such information, arrive at an appropriate cooking or heat setting for the oven. Likewise, the location of the French fries also plays a role in their preparation. Here, while the cooking of French fries per se may be made at a particular time duration, temperature and location within the cavity, what would be appropriate for a handful of French fries would certainly not be appropriate for 3kg of French fries; namely, the latter amount would be grossly undercooked if the cooking process of the former were applied, while, conversely, the former amount cooked to the latter amount's specifications would result in not only burnt French fries but in a potentially flammable and/or otherwise hazardous situation. Such may be applied to other cooking and/or kitchen appliances and the preparation and/or cooking of other foodstuff.

While the present disclosure will be set out in more detail with respect to application to a conventional oven, the present disclosure is not so limited and may be applied to any related appliance. Current cooking processes depend on the user to know in advance how much of a foodstuff is being placed where in an oven cavity for cooking and to then manually set the cooking parameters including but not limited to temperature level, time duration and heating function based upon such knowledge. While certain assistance may be found from certain known food recognition means, and other assisted cooking functionalities, providing the user with an indication of the mass and/or amount of food, as well as location, placed in the oven, remains elusive. As such, current methods rely upon the user to know in advance where within the cavity to place the foodstuff and manually entering a time and temperature for cooking the foodstuff, the aforementioned being the result of the user's best guess. Where the user's best guess turns out to be wrong, damage may ensue by way of at least ruined food and/or ruined cooking experience, if not damage to oven, kitchen appliances and the like.

### State of the Art

Certain solutions have been proposed in the art for addressing the aforementioned. However, these solutions do not take into consideration the measuring of the size or volume of food present nor the area which is occupied by the food nor the location thereof. Accordingly, the known prior art solutions are unable to automatically determine any subsequent information stemming from knowledge of the amount and/or location of the food present, including cooking parameters. Further still, lacking such information, expansion of functionality of the modern smart kitchen, which makes particular use of connectivity and the like, becomes unavailable or at least underutilized. Accordingly, there is a need in the art for an automatic determination of an amount of food present in an oven along with the area it occupies as well as its location therein or thereon. Such need expands to include informing both the human operator of the particular oven as well as any automatic, electronic means currently being at the disposal of the cooking operation, such informing including automatic consideration, information and execution of subsequent cooking steps.

### Scope of the Invention

An object of the present invention is to overcome the above drawbacks by providing a method for implementation with a household and/or kitchen appliance, such as but not limited to an oven or microwave oven or similar heat-based enclosed area cooking apparatus, the method indicating the mass and/or amount of food placed within the apparatus for cooking. The method may be executed relatively automatically by an appropriately configured smart module. While the present invention will be described with the placement of food within a cavity of an oven, the present invention is not limited to this particular application and may be applied to the placement of food in and/or on an appliance for the purpose of preparing the food.

Another object of the present invention is to determine a location of the food within a cooking cavity of the household and/or kitchen appliance. The location may be a factor and/or consideration with respect to the heating source, tray location, food location with respect to a feature of the cavity, and/or number and location of an empty tray slot. Based upon the food location, still another object of the present invention is to make use of the location information in determining whether the current food location is appropriate for the task at hand, such being determined at least by the type of food and current appliance operational mode and/or settings as well as the location of the food with respect to a heat source within the cavity. Still a further object is the communication to the user of the appropriateness or inappropriateness of the location with and/or without instruction on how to remedy and/or execute a next step, as well as safety control of the appliance itself should the current food location be determined to be a safety hazard.

Another object of the present invention is to determine a current and/or next recipe step in the preparation, cooking and the like of a meal and/or foodstuff generally for which the mass and/or amount of food, and/or the food location, is relevant, determine adjustments required in support of the current and/or next recipe steps, and then affect the execution of such steps. The execution may take the form of automatically communicating a parameter setting to a smart appliance by the smart module. Alternatively, the next steps may be communicated to a user who in turn manually adjusts the particular appliance.

These objects, as well as others that will become more apparent hereinafter, are achieved by a method set out in independent claim 1 as well as in the dependent claims, the method comprising the steps of obtaining an image of the food; detecting a location of the food within the apparatus by perspective transformation; segmenting a food portion of the image from a background of the image; determining global mean pixel values of the segmented food portion by application of the perspective transformation (namely, the conversation of a three dimensional image into a two dimensional image); summing dimensions of 1 value pixels; and at least one of estimating an area occupied by the food based upon the summing dimensions when the image is a coherent image and counting food objects as defined by a number of non-coherent areas within the image when the image is not a coherent image.

In brief and by way of background, a well known method of automated image analysis entails breaking down and otherwise dividing an image into certain parts or segments and applying resources to analyzing only those parts of interest. Supporting this method is the understanding that not all parts of an image may be of interest, such as for example, an object in the image being of greater interest than a backgound of the image. Commonly referred to as image segmentation, such proceeds with the understanding that the image and the background are made up of pixels of different values. As such, pixels representing the object may be distinguished from pixels representing the backgound at least by virtue of the value of the pixel. By way of example application, image pixels may be classified by a single global threshold value, namely, pixels having a value below the threshold belong to the image background while pixels having a value above the threshold belong to the object. Where it is desired to further distinguish beween multiple objects in the image, the pixels classified as belonging to the object may be further classified by local thresholds.

The image may be obtained by an appropriately configured camera arranged within the apparatus and/or an appropriately configured handheld device with camera and supporting electronics held proximate to and with a clear view into the location with respect to the apparatus that accommodates the foodstuff such as an apparatus cavity. Additionally, the camera may be positioned within a handle of a cavity door having a see-through window providing visual access into the cavity, the camera being so positioned within the handle to see into the cavity. The location of the food within the apparatus cavity is determined and, if a handheld device is used, its orientation to the now located food is also determined by means known to the skilled person. If the camera within the oven cavity is used, its location is already known and therefore a determination of its location with respect to the food location proceeds without the aforementioned step being required. The image is then segmented with the segmented portion then subjected to projection transformation. From the same, the area occupied by the food and/or the number of food objects may be estimated. Accordingly, an area occupied by the foodstuff may be determined and rendered in binary such that a 1 value pixel represents the food while a 0 value pixel represents the background. Summing of the 1 value pixels results in a quantification of the area occupied by the food stuff. Assigning this value to a particular food then results in an indication of the food mass - namely, how much food is required to occupy the aforementioned mass. Where the image defined by the 1 value pixels is coherent, it is understood that a single food item is present, e.g., a pizza. Where the image so defined is incoherent, namely, it comprises a number of separate coherent images, it is understood that a number of individual food items are present together. Here, the number of individually defined or depicted food items may be summed to provide a number of such food items which, when assigned to a particular food type, reveals the number of such items, e.g., a specific number of French fries present. Knowledge of the mass and/or number of food items may then be communicated to a smart home appliance and/or the user to affect adjustment of appliance settings to fit the food located therein.

Regarding location of the food within the cavity, such may be determined on the basis of algorithms appropriately stored and configured to output classification the image and to perform object detection as well as semantic segmentation. Certain information obtained from such image analysis may then be considered so as to determine not only the location of the food within the cavity but location of a tray and other such accoutrements. Locations may further be determined by detecting locations of unoccupied versus occupied tray slots within the cavity and considerations of stored knowledge of the layout of the cavity with respect to the slots generally. Food type may also be obtained by image analysis which, when considered with respect to heat source, appliance operation mode and the like, may lead to a determination of whether the location now determined is appropriate. Feedback to the user may be provided through an appropriately linked user interface configured to communicate not only if and/or when the food is in an appropriate location, but also how, if necessary to remedy an inappropriate situation. Further still, such communication stream may be used by the appliance control unit as a safety check and prompt to sui sponte undertake remedial measures and/or consistency with ongoing cooking recipes.

### Brief Disclosure of the Drawings

Further features and advantages of the invention will become clearer in light of the detailed description of some preferred but not exclusive embodiments of the inventive method of determining a mass of food, shown by way of non-limiting examples with the aid of the attached drawings, wherein:
FIG. 1A is a perspective view of an oven with foodstuff arranged therein;
FIG. 1B is another perspective view of an oven with foodstuff arranged therein;
FIG. 2 is an RGB image of the foodstuff;
FIG. 3 is a binary masked view of the RGB image;
FIG. 4 is a segmented view of the binary mask;
FIG. 5 is a flow diagram of a method according to the present invention;
FIG 6 is a flow diagram of another method according to the present invention; and
FIG 7 is a flow diagram of still another method according to the present invention.

### Best Modes of Carrying Out the Invention

The present invention will be described with respect to application to a conventional oven having a heated cavity for the cooking of food for illustrative purposes only and may otherwise be applied to any other applicance on or within which food stuff may be prepared and/or cooked. The present invention is further not limited by the location of the apparatus which may be in a private or professional setting, kitchen or other such location.

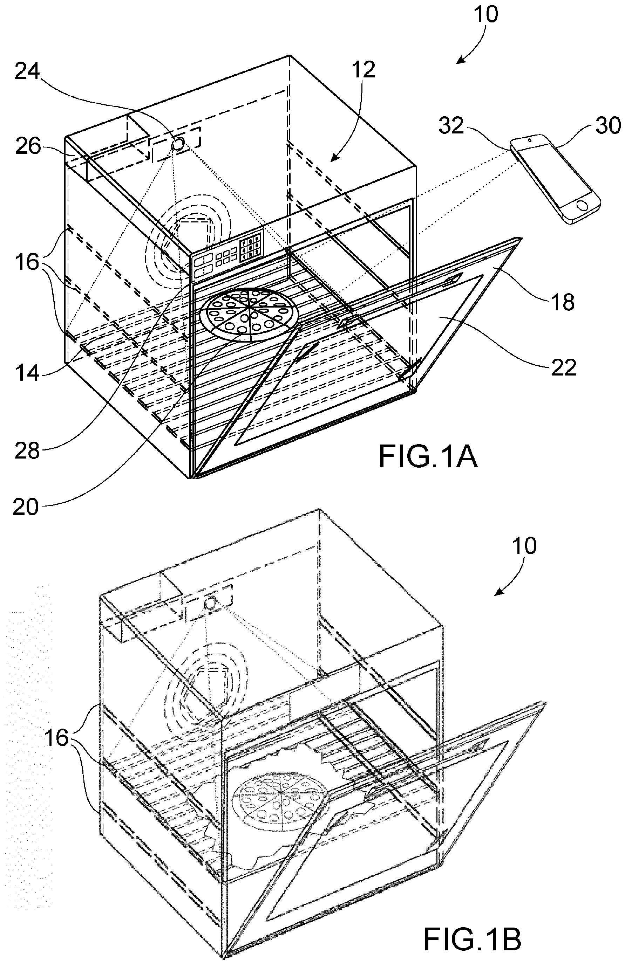

Figures 1A and 1B depict a typical oven 10 having a cavity 12 with a tray 14 configured to be accommodated on one of a number of successive slots 16 arranged in a vertically displaced manner along an inner perimeter of the cavity. As is known in the art, the tray 14 may be slid into any one of the slots 16, so as to occupy a position within the cavity defined by the location of that slot. Figure 1A depicts the tray in a lower most slot while Figure 1B depicts the tray in a middle slot. The oven may include a door 18 which may be configured to pivot open, such as pivot downwards, thereby exposing the cavity to outside of the oven such that physical and visual access may be obtained of the tray and the cavity in general. The door 18 may include a window 22 through which the cavity may be viewed from outside the oven, for example, once the door is closed. When the door is opened, a user may place or retrieve foodstuff placed on the tray or elsewhere within the cavity.

As further depicted in Figure 1, a food stuff 20, such as a pizza, is placed in the cavity 12 on the tray 14 arranged in a first of several slots 16. A camera 24 may be arranged within the cavity 14 with a line of sight to within the cavity itself and more particular to the tray arranged within the cavity and still more particular to foodstuff arranged on the tray itself. A processing module 26 may also be arranged within the cavity, proximate to the cavity and/or external to the oven. Each of the arrangements includes the processing module 26 being appropriately configured and otherwise supported for wired or wireless communication with oven controls 28. Such may residing the processing module on an appropriate server configured for such wireless and/or remote communication, online and/or offline, as envisioned by the skilled person. The same applies to the oven controls 28. The particular location of the camera 24 and processing module 26 is a matter of design choice limited by the functionality herein attributed thereto. The oven controls 28 may comprise any such controls known to the skilled person, including a user interface, processing and memory means, and communication elements.

A smart mobile device 30, such as a handheld smart mobile telephone, equipped with a camera 32 is also depicted in Figure 1. The camera 32 may be built in or externally connected to the device 30 which may include sufficient electronics and configurations, as would be known to the skilled person, to affect the below detailed functionality, including, for example, being brought into the line of sight of the oven cavity 12, either directly with the door 18 open or indirectly when the door is closed through the window 22, such that device 30 may be made to take a picture of the inside of the cavity 12 and in particular the foodstuff 20 laying on the tray 14.

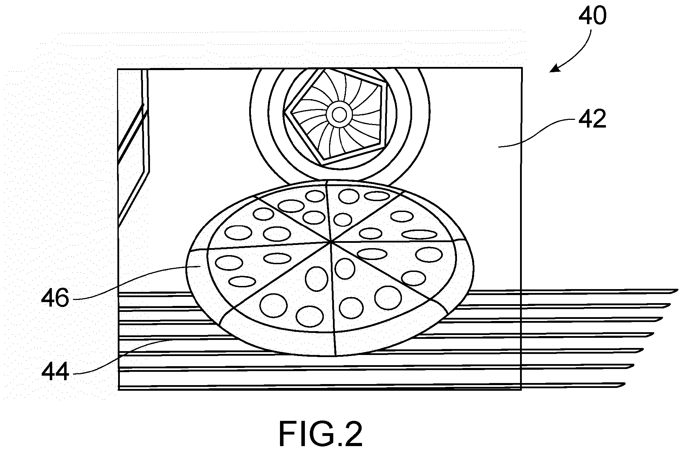

Camera 24 and/or camera 32 are used to obtain an image of food 20. The image may be an RBG image 40 as depicted in Figure 2. As shown, the image includes a cavity 42 in which lies a tray 44 on which a pizza 46 lays. From this image, a goal of the image may be determined, namely, the amount or area occupied and otherwise covered by food, here a pizza, placed on a tray in the cavity of an oven, the food being intended for cooking by the oven in the cavity. As the image will produce a 2-dimensional understanding of the area occupied by the food, the total volume or mass of the food may thus be determined.

After the image has been taken, a next step is to determine the location of the food within the cavity, namely, the location of the tray level. This may be indicated numerically if the particular tray levels are known in advance. Alternatively, a determination of which slots are empty may be made, thereby determining the occupied slot by at least a process of elimination if not direct identification. Advanced knowledge of at least the basic layout of the cavity may be stored into local memory and used for cross-referenceing the occupied slot location and area of coveration. Likewise, other locations and their respective indications may be substituted here for tray level without departing from the spirit or scope of the invention. To make such a determination, a classification neural network or any other classification algorithm as known to the skilled person may be used. The input to for the classification neural network is the RGB image, such as the one depicted in Figure 2. The classification algorithm may comprise a number of algorithms. A first algorithm of the number of algorithms may be configured to perform an image classification. A second of the number of algorithms may be configured to perform object detection. A third of the number of algorithms may be configured to perform semantic segmentation of the image. Semantic segmentation, as is known in the art, entails the digital grouping or partitioning of like image segments in digital image processing. Configuration and implementation of the aforementioned algorithms are limited only by the imagination of the skilled person tasked with the creation of the aforementioned. The output from the classification neural network is the location of the tray within the cavity, such as identification by number of one of the slots 16 accommodating the tray 14; identification by the slots which are unoccupied; identification based upon spatial location with respect to select points within the cavity including heat source, side wall and the like. Tray and/or food location identification is not limited to the aforementioned and may include other reasonable identifiers as may be envisioned by the skilled person.

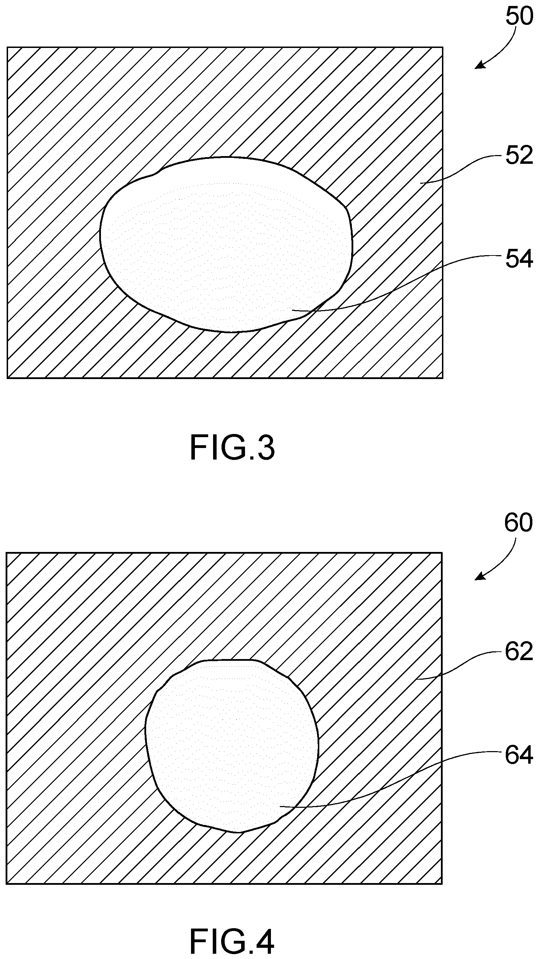

Based upon the tray level or other such location indicia, the segmentation of the RGB image may be affected by an encoder-decoder neural network or any similar network envisioned by the skilled person. The input into such network comprises the RGB image obtained by camera 24 and/or camera 32, as depicted in Figure 2, and the output of such network is a binary mask with 0 values representing the background and 1 values representing the food; an example of such an image being depicted in Figure 3. As depicted, the image 50 includes background 52 and food 54.

With the binary mask, the RGB image can be modified to segment the food from the background. Here, a projection transformation step, with the pixels with 1 value, are converted from pixel size to world unit size using the transformation matrix as used and otherwise determined above with respect to determining the tray location from the image being taken by the camera 24 and/or camera 32. An example image of the same may be found in Figure 4, namely, image 60 includes background 62 and food 64. As shown, image 60 is a coherent image. As such, image 60 defines a single piece of foodstuff of a certain area defined by the summation of all the 1 value pixels. By way of alternative, were the image 60 to be an incoherent image, such incoherent image would define a number of foodstuffs as being the number of individual coherent images making up the totality of the incoherent images. With such an incoherent image, the number of such individual coherent images, namely, individual food stuffs, can now be counted.

Execution of the counting may be affected locally at the external processing module 26, appropriately arranged and configured, as would be envisioned by the skilled person, to perform the aforementioned. Likewise, such execution may be affected by the smart mobile device 30, itself appropriately configured for the same. Still further, the image may be transmitted to an offsite and appropriately configured processing module, the transmitting being made via a communication module arranged in communication with the camera 24 and/or camera 32.

Where camera 32 is used, either in place of or in conjunction with camera 24, additional steps directed to the orientation of the camera 32 within the 2D space around the oven cavity 14 is required. Such steps and their execution are a matter of design choice within the knowledge of the skilled person. The remaining steps, as detailed above, are then duly performed.

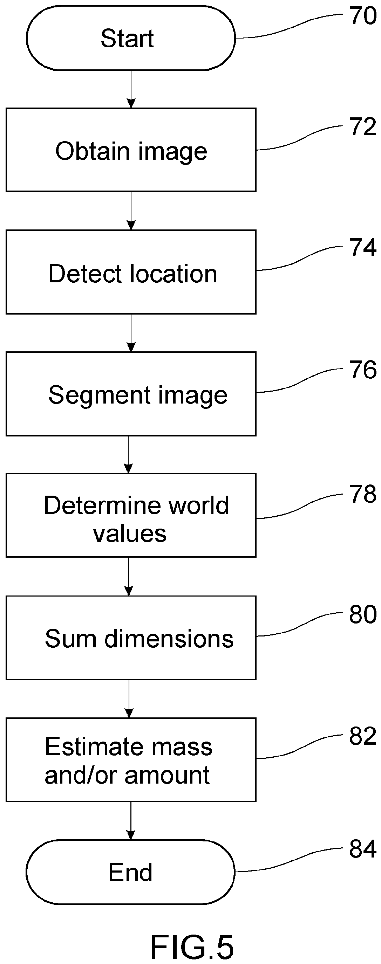

Figure 5 depicts a method according to the present invention. The method starts 70 and then proceeds with a first step of obtaining the image of foodstuff arranged in an oven cavity (72). In a next step, the location of the food and/or the tray upon which the food sits is made (74). This is followed by a segmentation of the image (76) obtained in step 72 in order to segment the food from the image background. A determination of global pixel values (78) of the segmented food based upon the perspective transformation applied in step 74 is then made, to be followed by 1 value pixel summation (80) and an estimation of food mass and/or amount of food present based upon the aforementioned (82). The method may end (84) or continue with certain applications of the information obtained by the aforementioned.

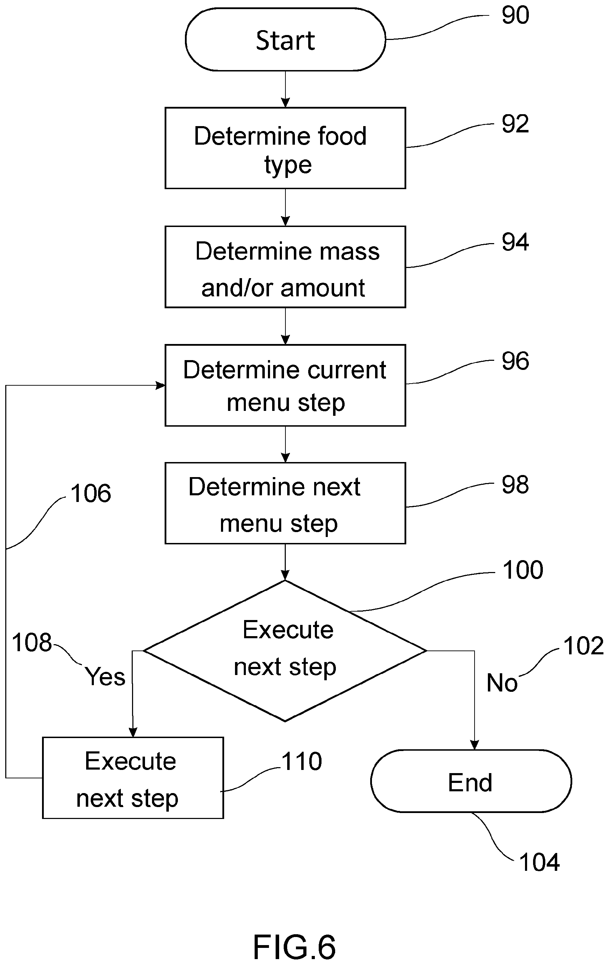

As depicted in Figure 6, the aforementioned obtained information about the foodstuff, namely its mass and/or number, may be then applied in determining a time and temperature for appropriate cooking thereof. After starting (90), an initial step may be a determination of food type (92). Such may be arrived at manually via user input or automatically via automatic food identification means such as the aforementioned algorithms implemented using a neural network, such application of algorithms generally being known to the skilled person. A determination is then made of the foodstuff mass and/or number/amount as detailed above (94). Such is then followed by a determination of where in a particular menu the foodstuff preparation currently stands (96), namely, from a current perspective and/or, if appropriate, a next step. Certain parameters of the current stand are also determined, including duration of current cooking, current temperature, desired temperature, and the like. A next step in the recipe being prepared is then made (98). The menu may be in electronic form, stored locally at the external processing module 26 and/or smart mobile device 30 and the like; or remotely with sufficient access availability for searching the menu and comparing the current food mass and/or number. Additional information may be obtained and used in this consideration, including a previously executed step triggered by the previous consideration of the menu; certain operating parameters of the oven and/or related kitchen appliance; and/or current operating parameters, such as current temperature and current duration of cooking at the current and/or previous temperature. The food type may be determined manually by the user and/or automatically as with the aforementioned algorithms.. By way of next step, a temperature and/or duration of cooking may be determined and implemented either automatically via communication of the external processing module and/or smart mobile device 30 to smart oven controls or manually to the user who then manually adjusts such controls. A determination (100) of whether to take the next menu step or otherwise cease preparations is then executed. If there is (108), the method executes the next step (110) and then returns to step 96. If not (102), the method ends (104).

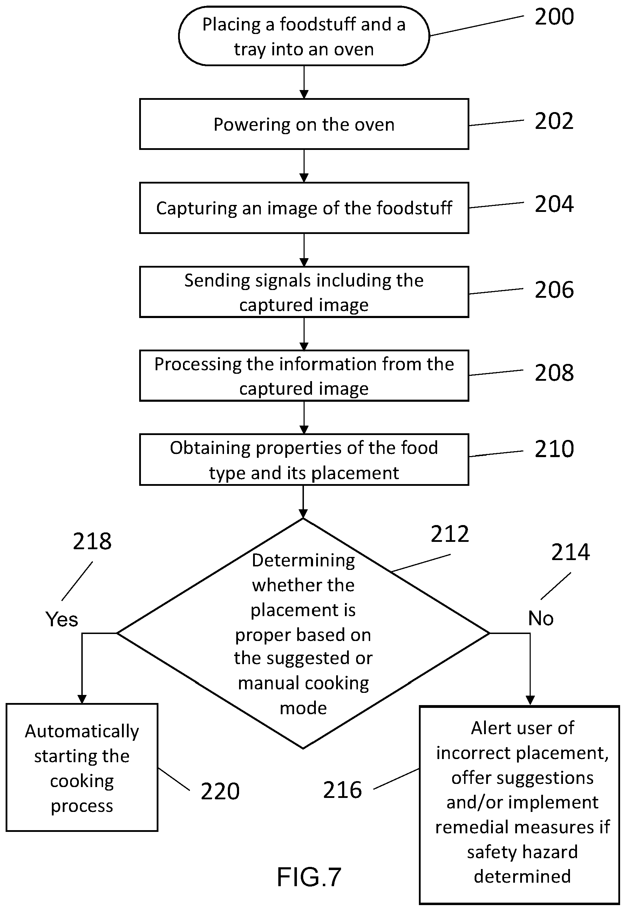

Figure 7 sets out a method of determining the location of the food and/or tray within the appliance cavity. The method starts with the placement of the food and tray into the oven (200) after which the oven is powered on (202). Alternatively, the oven may be preheated. An image of the foodstuff is captured (204) by means described above. The captured image along with other related signals are directed to a neural network or the like (206) wherein the aforementioned algorithms are executed on the captured image (208). Communication may be affected directly from the control unit of the appliance and/or smart device. Here, the appliance may be equipped with a transceiver to affect the communication. The smart device may also be so equipped and configured. Appropriately configured and arranged user interfaces would also be included on each of the appliance and smart device as well as appropriate memory and processing means as required to carry out the present invention. Output generated by the algorithms indicates certain food properties as well the food placement (step 210). The food properties include the type and volume of food and may be used in automated recipes and the like as detailed above. A determination is then made whether the placement of the food within the cavity is proper, namely, consistent with the suggested cooking mode of the automated recipe or with the manual cooking mode selected by the user (step 212). An additional consideration in step 212 is the location of the food with respect to the heating source. These two considerations may be considered sequentially, namely first cooking mode based and then location to heating source based. If the food placement is consistent with the type of cooking mode and/or location of heating source (step 218) then the cooking process starts (step 220) or picks up where last left off. In the alternative, if the food placement is inconsistent (step 214), the user is notified of the incorrect placement, via at least any one of the aforementioned user interfaces, and may be provided with guidance towards correct placement in the form of any type of human recognizable communications. Safety measures may also be implemented in the event the inconsistent placement is determined to introduce an unacceptable hazard to the user, appliance, and foodstuff (step 216). The method set out here may be executed on an appropriately configured appliance and/or mobile device. The method according to the invention as described herein is susceptible to numerous modifications and variations, all of which are within the inventive concept expressed in the appended claims. All the details may be replaced by other technically equivalent elements, without departing form the scope of protection of the present invention.

## Claims

1. A method of determining a mass of food arranged on a surface in an apparatus, the method comprising the steps of:
• Obtaining an image of the food;
• Detecting a location of the food within or on the apparatus;
• Segmenting a food portion of the image from a background of the image;
• Determining global pixel values of the segmented food portion by application of a perspective transformation based upon the detected location of the food within or on the apparatus;
• Summing dimensions of 1 value pixels; and
• At least one of estimating an area occupied by the food based upon the summing dimensions when the image is a coherent image and counting food objects as defined by a number of non-coherent areas within the image when the image is not a coherent image.

2. The method according to claim 1, further comprising the steps of arranging a camera within or on the apparatus, the camera configured to perform the step of obtaining the image of the food.

3. The method according to claim 1, wherein the step of obtaining an image is performed with a handheld smart mobile device, the device equipped with a camera configured to take the image.

4. The method according to claim 3, wherein the smart mobile device is further configured to read the image and at least one of determine an orientation of the smart mobile device in 3D space with respect to the at least one of the apparatus, the surface and the food, and transmit the image to an external processing module.

5. The method according to claim 4, further comprising the step of segmenting, at at least one of the smart mobile device and the external processing module, an image of the food from a background of the image, and masking the background from the image of the food.

6. The method according to claim 5, further comprising the steps of projection transforming, at at least one of the smart mobile device and the external processing module, the segmented food image.

7. The method according to claim 6, further comprising the steps of calculating, at at least one of the smart mobile device and the external processing module, at least one of an area occupied by the food, a mass of the food, an amount of the food and a number of food items.

8. The method according to claim 3, wherein the external processing module is arranged in or on the apparatus.

9. The method according to claim 8, wherein the external processing module is arranged in communication with oven controls in order to enable a setting of the oven controls.

10. The method according to claim 1, wherein:
• the image comprises an RGB image; and
• the step of determining a location of the food within or on the apparatus, further comprises the steps of inputting the image into at least one algorithm and obtaining an output from the at least one algorithm indicative of the location of the food within the oven.

11. The method according to claim 10, wherein the classification algorithm comprises a neural network.

12. The method according to claim 10, wherein the step of projection transforming the food portion further comprises the step of applying a predefined transformation matrix based upon the location of the food within or on the apparatus.

13. The method according to claim 10, wherein the step of segmenting further comprises the step of segmentation of the image by an encoder-decoder neural network, wherein an input to the encoder-decoder neural network is the RGB image and the output is a binary mask.

14. The method according to claim 10, wherein the at least one algorithm further comprises:
• a first algorithm configured to generate a first output indicating a classification of the image;
• a second algorithm configured to generate a second output indicating an object detection, the object comprising at least one of food, tray, and tray slot; and
• a third algorithm configured to generate a third output indicating semantic image segmentation of the image.

15. The method according to claim 14, further comprising the steps of analyzing the image to determining a type of the food and a location of the food within the cavity based upon at least one of the tray location, unoccupied tray slot location, and food location based upon distance to at least one cavity wall.

16. The method according to claim 15, further comprising the steps of determining whether the food location is proper based upon at least one of: the food type and the food's distance to the head source; and the food type and oven cooking mode.

17. The method according to claim 16, further comprising the steps of:
• generating and transmitting a message comprising an indication of whether the food location is proper; and/or
• controlling operation of the apparatus in accordance with the determination of whether the food location is proper.

18. The method according to claim 9, wherein the external processing device is further configured to determine a type of the food and adapt the setting of the setting of the apparatus control in response to the food type and the mass of food.

19. The method according to claim 14, wherein the external processing device further comprises at least one of user input configured for manual input, pre-defined cooking programs configured to be implemented by the apparatus, a function configured to import food recipes for implementation by the apparatus, food recognition software configured and arranged to recognize a presence of a food in or on the apparatus, and wherein the apparatus comprises at least one of an oven and kitchen appliance.

20. The method according to claims 1-19, further comprising the steps of:
• generating and transmitting a message comprising an indication to a user of cooking parameters of a next cooking step in a cooking process, the indication of cooking parameters based upon at least one of an area occupied by the food and a number of food objects, wherein the cooking parameters comprise at least one of temperature, time and heating source; and/or
• controlling operation of the apparatus to automatically execute at least one of the cooking parameters when the at least one of the area occupied by the food and a number of the food objects is consistent with the next cooking step.

21. The method according to claim 20, wherein the heating source comprises at least one of convection, radiant, steam, electric waves and microwaves.
